# EUROPÄISCHE PATENTSCHRIFT

(11) **EP 2 551 050 B1**
(45) Veröffentlichungstag und Bekanntmachung des Hinweises auf die Patenterteilung: **13.12.2023**
(21) Anmeldenummer: 12158733.1
(22) Anmeldetag: 09.03.2012
(51) Int. Cl.: B23K 31/12, B23K 9/028, B23K 9/167, B23K 9/23, B23K 9/00, F22B 37/10, F23M 5/08, C21D 9/50

(54) **Verfahren zum Schweißen von dünnwandigen Rohren mittels Spitzentemperaturanlassschweißen**
Method for welding thin-walled pipes using peak temperature welding
Procédé de soudage de tuyaux à paroi mince par soudage à haute température

(30) Priorität: 11.11.2011 DE 102011055282; 26.07.2011 DE 102011052161
(43) Veröffentlichungstag der Anmeldung: 30.01.2013
(73) Patentinhaber: General Electric Technology GmbH, 5400 Baden (CH)
(72) Erfinder: Baumgarten, Torsten, 99192 Erfurt-Frienstedt (DE); Kopp, Andreas, 71101 Schönaich (DE); Helmrich, Andreas, 73630 Remshalden (DE); Yildirim, Keyfo, 70376 Stuttgart (DE)
(74) Vertreter: Wesela-Bauman, Grzegorz

(56) Entgegenhaltungen:
- WO-A1-2008/113369
- Heuser: "Schweisstechnische Verarbeitung neuer Kraftwerkstähle", , 20. Oktober 2009 (2009-10-20), Seiten 1-50, XP55043708, Gefunden im Internet: URL:http://bayern-innovativ.de/schweisstec hnik2009/download/heuser.pdf [gefunden am 2012-11-09]
- VAILLANT ET AL: "T/P23, 24, 911 and 92: New grades for advanced coal-fired power plants-Properties and experience", INTERNATIONAL JOURNAL OF PRESSURE VESSELS AND PIPING, ELSEVIER SCIENCE PUBLISHERS, BARKING, GB, Bd. 85, Nr. 1-2, 1. Januar 2008 (2008-01-01), Seiten 38-46, XP022414792, ISSN: 0308-0161, DOI: 10.1016/J.IJPVP.2007.06.011

## Beschreibung

Die Erfindung betrifft ein Verfahren zum Verbinden von zwei benachbarten Teilen, insbesondere von zwei Rohren von Rohrwandregistern zur Herstellung einer Kesselwand. Die Kesselwand eines Dampferzeugers besteht aus Medium durchströmten Rohren, die über zwischen den Rohren vorhandene Stege miteinander verbunden sind und eine geschlossene Kesselwand bilden. Die Rohrwandregister können über die Stege an Stegregisterstößen und/oder über die Rohre an Rundnahtregisterstößen miteinander verbunden werden. Die Verbindung erfolgt durch Schweißen, insbesondere im Wolfram-Inertgas-Schweißverfahren.

Heuser: "Schweißtechnische Verarbeitung neuer Kraftwerkstähle", 20. Oktober 2009 (2009-10-20), Seiten 1-50, XP55043708, offenbart ein Verfahren nach dem Oberbegriff des Patentanspruches 1.

Die Kesselwand eines Dampferzeugers ist im Betrieb großen Belastungen ausgesetzt. Insbesondere für die von einem Arbeitsmedium durchströmten Rohre müssen entsprechend belastbare Werkstoffe verwendet werden. Die Kesselwand weist eine die Brennkammer des Kessels umschließende Brennkammerwand und eine sich daran anschließende Umfassungswand eines Rauchgaszuges auf. Sowohl die Brennkammerwand, als auch die Umfassungswand müssen ausreichend Wärme abführen können. Um diesen Anforderungen Rechnung zu tragen, könnte als Material für die Wände eine martensitische Stahllegierung verwendet werden. Diese Materialien bedürfen aber der Wärmenachbehandlung. Deswegen ist es wünschenswert, einen Werkstoff einzusetzen, bei dem die Wärmenachbehandlung vermieden werden kann. Es werden daher bevorzugt ferritische, bainitische oder bainitisch-martensitische Stahllegierungen verwendet. Einige dieser Legierungen neigen selbst beim Schweißen unter Vorwärmung aufgrund ihrer chemischen Zusammensetzung zur Aufhärtung beim Abkühlen aus der Schweißtemperatur. Solche Legierungen werden nachfolgend als "lufthärtend" bezeichnet. Insbesondere werden die Werkstoffe T23 (7CrWVMoNb 9-6) oder T24 (7CrMoVTiB 10-10) eingesetzt, welche in der europäischen Norm EN 10216, sowie der amerikanischen Norm A213 / A213M-09a der ASTM, International, West Conshohocken in USA definiert und standardisiert sind. Der Werkstoff T24 hat beispielsweise die Normbezeichnung 7CrMoVTiB10-10. Der Kohlenstoffanteil der zu verbindenden Teile kann nach den technischen Lieferbedingungen für druckbeanspruchte nahtlose Stahlrohe (DIN EN 10216-2) 0,05 Gew% - 0,10 Gew% (Gewichtsprozent) betragen.

Es hat sich herausgestellt, dass bei Rohren aus derartigen Werkstoffen, insbesondere aus dem Werkstoff T24 und T23 im Betrieb des Dampferzeugers Schäden auftreten. Der Werkstoff härtet beim Schweißen aus, so dass sich an der Rohrinnenseite durch geometrische Unregelmäßigkeiten in der Wurzel, den hohen Druck und die hohen Temperaturen Risse bilden, die dann zur Beschädigung und letztlich zur Leckage des Rohres führen.

Rohre mit einer Wandstärke von bis 5 mm bis maximal 10 mm werden hier als dünnwandige Rohre bezeichnet. Das VD TÜV Werkstoffblatt 533/2 sieht eine Wärmenachbehandlung bei WIG geschweißten dünnwandigen Rohren bis zu einer Wandstärke von ≤ 10 mm nicht vor. Aufhärtungen beim Schweißen könnten zwar durch eine Wärmenachbehandlung mit einer Anlasstemperatur beseitigt werden. Es hat sich aber gezeigt, dass dies nicht nur aufwendig ist, sondern auch zur Rissbildung und zum Verzug der wärmebehandelten Teile führen kann. Bei großen Kesseln ist dieses Verfahren nicht praktikabel.

Eine andere Lösung wurde bislang darin gesehen, oberhalb der Martensitstarttemperatur zu schweißen. Diese Temperatur ist allerdings sehr hoch und dieser Vorschlag daher in der Praxis ebenfalls ungeeignet. Dieses Verfahren führt zu einem Überhitzungsgefüge und geht mit einer Verschlechterung der Materialeigenschaften einher.

Es ist daher eine Aufgabe der vorliegenden Erfindung, ein Schweißverfahren zum Schweißen von Rohrwandregistern anzugeben, das auch für lufthärtende Stahllegierungen und insbesondere für die Werkstoffe T23 und T24 geeignet ist und insbesondere für dünnwandige Rohre.

Diese Aufgabe wird durch ein Verfahren mit den Merkmalen des Patentanspruches 1 gelöst.

Beim Verbindungsschweißen von zwei Teilen, beispielsweise von zwei Rohren oder zwei Stegen, wird eine mehrlagige Schweißnaht in einer Fuge erzeugt. Zunächst wird eine Wurzellage hergestellt. Die Wurzellage befindet sich an einer Innenseite, die beim Schweißen von zwei Rohren durch die dem Medium zugeordnete Rohrinnenwand gebildet ist. Die Fuge erweitert sich vorzugsweise von der Innenseite zu einer entgegengesetzten Außenseite. Die Fuge kann als V-Fuge mit einem dreieck- oder trapezförmigen Querschnitt ausgeführt sein.

Im Anschluss daran wird wenigstens eine Fülllage auf die Wurzellage aufgebracht, mit der die Fuge zwischen den beiden zu verbindenden Teilen möglichst bis im Wesentlichen auf Höhe der Außenseite aufgefüllt wird. Das Verbindungsschweißen artgleicher Rohre erfolgt unter Verwendung eines gegenüber dem Material der zu verbindenden Teile artgleichen Schweißzusatzwerkstoffes. Also werden beispielsweise zwei Rohre aus T24 mit dem zugehörigen Schweißzusatzwerkstoff WZCrMo2VTiNb verschweißt. Das Schweißverfahren kann außerdem für artfremde Schweißverbindungen, bei der mindestens eines der zu verbindenden Teile und/oder das Schweißgut lufthärtende Eigenschaften aufweist, angewandt werden. Als Schweißverfahren wird das sogenannten Wolfram-Inertgas-Schweißen (WIG-Schweißen) eingesetzt.

Die Schweißbedingungen für die Wurzellage und die Fülllage können geeignet bestimmt werden. Dabei entstehen im Bereich der Wurzellage gehärtete Zonen, in denen sich die α-Mischkristalle in γ-Mischkristalle umgewandelt haben. Die γ-Mischkristalle besitzen eine höhere Kohlenstofflöslichkeit, was beim Abkühlen zu einer Verspannung des Gitters und einer damit einhergehenden Aufhärtung des Materials in der Wärme beeinflussten Zone, sowie dem Schweißgut selbst führt. Diese Aushärtung tritt auch im Bereich der Innenseite der zu verbindenden Teile auf, was besonders kritisch ist. Diese große Härte macht die Teile, beispielsweise die Rohrwandregister an der Verbindungsstelle, insbesondere an der Innenoberfläche, empfindlich für das Entstehen von Rissen ggf. auch Spannungsrisskorrosion. Ein weiterer kritischer, auftretender Härtemechanismus ist die Ausscheidung von Sonderkarbiden in einem Temperaturbereich von 550°C. Derartige Sonderkarbide führen zu einer Sensibilisierung des wärmebeeinflussten Bereichs und einer erhöhten Anfälligkeit gegen den sog. Schadensmechanismus der Relaxationsrissbildung.

Erfindungsgemäß wird deswegen eine oder mehrere Decklagen auf die Fülllage geschweißt, wobei die Schweißparameter derart vorgegeben werden, dass die durch das Schweißen der Decklagen verursachte Erwärmung der Schweißnaht im Bereich Wurzellage an der Innenseite im Bereich einer wärmebeeinflussten Zone in einem Optimierungstemperaturbereich von 600°C bis 1000°C liegt und daher zur Reduzierung der Härte führt. Der Optimierungstemperaturbereich zur Optimierung der Härte sowie des Mikrogefüges wird durch die werkszoffspezifischen Halte- bzw. Umwandlungspunkten der A_{C1}-Temperatur und der A_{C3}-Temperatur des Phasendiagramms und insbesondere auch den werkstoffspezifischen Ausscheidungstemperaturen von Sonderkarbiden bestimmt. Diese Bedingung wird vorzugsweise dadurch erreicht, dass die Schweißstromstärke auf einen Bereich zwischen 70 und 120 A begrenzt wird.

Bevorzugt wird die wenigstens eine Decklage durch sogenanntes Pendelschweißen aufgebracht. Dabei ist die Schweißraupe der Decklage nicht als Strichraupe, sondern als Pendelraupe ausgeführt. Sie erstreckt sich in einer Schlangenlinie in der Fuge. Bei der Herstellung der Pendelraupe wird die Schweißelektrode und/oder der Schweißdraht aus Schweißzusatzwerkstoff nicht nur entlang der Schweißnaht, sondern gleichzeitig quer dazu hin und herbewegt, so dass eine schlagenlinienförmige Raupenform entsteht. Durch diese Bewegung ändert sich ständig der Abstand zu den zuvor aufgehärteten Zonen an der Innenseite bzw. im Bereich der Wurzellage. Die Wärmezufuhr in diese aufgehärteten Zonen ist moderat, so dass die Temperatur im Optimierungstemperaturbereich gehalten werden kann. Insbesondere ist dabei der Schweißstrom begrenzt auf einen Maximalwert im Bereich zwischen 70 und 120 A.

Vorzugsweise ist der Schweißstrom zum Schweißen der Wurzellage und/oder der Fülllage größer als zum Schweißen der wenigstens einen Decklage. Der Schweißstrom zum Schweißen der Wurzellage kann kleiner sein als zum Schweißen der Fülllage.

Vorteilhafte Ausgestaltungen des erfindungsgemäßen Verfahrens ergeben sich aus den abhängigen Patentansprüchen sowie der Beschreibung. Die Beschreibung erläutert ein Ausführungsbeispiel des Verfahrens und beschränkt sich auf wesentliche Merkmale der Erfindung sowie sonstiger Gegebenheiten. Die Zeichnung ist ergänzend heranzuziehen. Es zeigen:
Figur 1 eine schematische Darstellung eines Rohres beispielsgemäß als Teil eines Rohrwandregisters in perspektivischer Ansicht,
Figur 2 eine Fuge mit einer mehrlagigen Schweißnaht an einer Verbindungsstelle zweier Teile, beispielsweise zweier Rohre in schematische Querschnittsdarstellung,
Figuren 3 und 4 eine schematische Darstellung des Verlaufs einer oder mehrerer Pendelraupen einer Decklage der Schweißnaht,
Figuren 5 bis 8 schematische Querschnittsdarstellungen, die die Möglichkeiten der Anordnung mehrerer Lagen der Schweißnaht zeigen,
Figur 9 eine Darstellung des Zusammenhangs zwischen der Stromstärke des Schweißstroms I und der Wandstärke W und
Figur 10 den Zusammenhang zwischen der Temperatur T in einer wärmebeeinflussten Zone Z abhängig von der Zeit t für verschiedene Stromstärken des Schweißstroms I und für eine Wandstärke W.

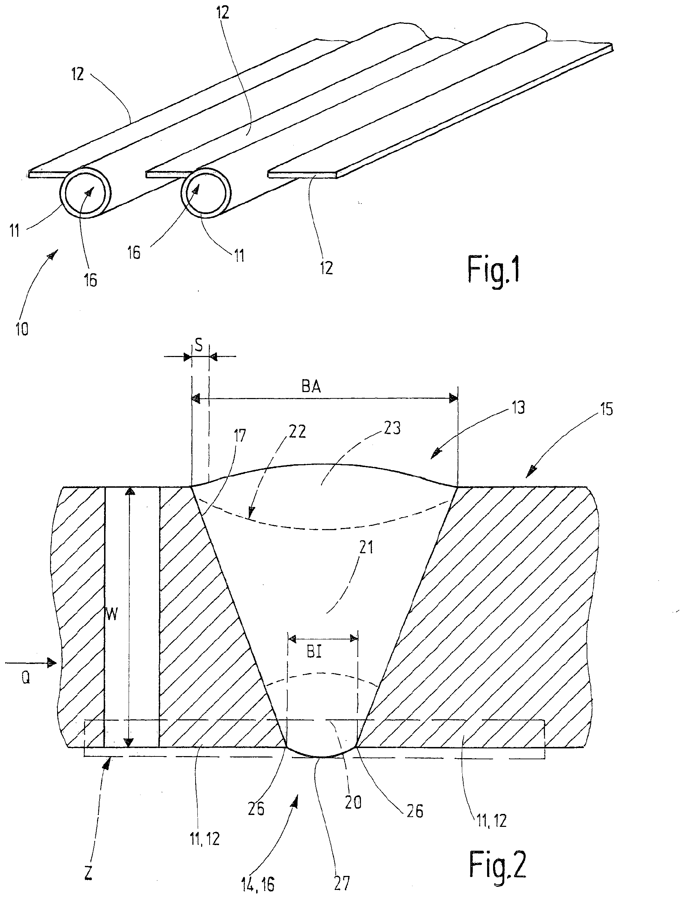

In Figur 1 ist ein Rohr 11 beispielhaft als Teil eines Rohrwandregister 10 dargestellt, das zur Herstellung einer Kesselwand dient. Die Kesselwand besteht aus einer eine Brennkammer des Kessels umschließenden Brennkammerwand und einer Umfassungswand, die den sich an die Brennkammer anschließenden Rauchgaszug umschließt. Die Kesselwand ist gasdicht ausgeführt.

Es ist häufig erforderlich Rohre 11 fluiddicht durch Schweißen, z.B. WIG-Schweißen an den beiden betreffenden Rohrenden fluiddicht miteinander zu verbinden, z.B. bei der Herstellung der Kesselwand. Dabei werden Rohre 11 benachbarter Rohrwandregister 10 miteinander verbunden. Diese Verbindung wird durch Schweißen erreicht, beispielsgemäß durch WIG-Schweißen. Die Rohre 11 zweier benachbarter Rohrwandregister 10 werden an Rundnahtregisterstößen und/oder Stege 12 zweier benachbarter Rohrwandregister 10 an Stegregisterstößen miteinander durch eine Schweißnaht 13 verbunden. Eine solche Schweißnaht 13 ist in Figur 2 schematisch veranschaulicht. Die Fuge 17 für die Schweißverbindung zwischen den beiden zu verbindenden Teilen 11, 12 weist einen dreieck- oder trapezförmigen Querschnitt auf und erweitert sich von einer Innenseite 14 zu einer Außenseite 15. Im Falle der Verbindung zweier Rohre ist die Innenseite 14 durch die einem Arbeitsmedium zugewandte Rohrinnenwand 16 gebildet. Die Breite BA der Fuge 17 an der Außenseite 15 beträgt etwa 10 bis 12 Millimeter. Die Breite BI der Fuge 17 an der Innenseite 14 beträgt etwa 2 bis 4 Millimeter.

Die Wandstärke W der beiden zu verbindenden Teile 11, 12 beträgt zwischen 5 und 10 mm. Die Rohre 11 und/oder die Stege 12 bestehen aus einer lufthärtenden Stahllegierung, insbesondere einer bainitischen oder bainitischmartensitischen Stahllegierung. Beim Ausführungsbeispiel wird als Werkstoff T24 (7CrMoVTiB10-10) eingesetzt, dessen Kohlenstoffanteil zumindest 0,05 Gew% und beispielsweise 0,1 Gew% beträgt.

Die Schweißnaht 13 ist mehrlagig aufgebaut. Sie weist eine Wurzellage 20 an der Innenseite 14 der zu verbindenden Teile 11, 12 auf. Auf diese Wurzellage 20 wird wenigstens eine Fülllage 21 aufgebracht, die die Fuge 17 zusammen mit der Wurzellage 20 im Wesentlichen vollständig ausfüllt. Die Anzahl der Fülllagen hängt von der Wanddicke ab. Die Fülllage 21 grenzt beispielsgemäß an die Außenseite 15 an und weist eine von der Wurzellage 20 abgewandte in Fugenquerrichtung Q konkav gewölbt verlaufenden Oberfläche 22 auf. Die Fuge 17 wird durch die Fülllage 21 und die Wurzellage 20 zumindest zu 90% ausgefüllt.

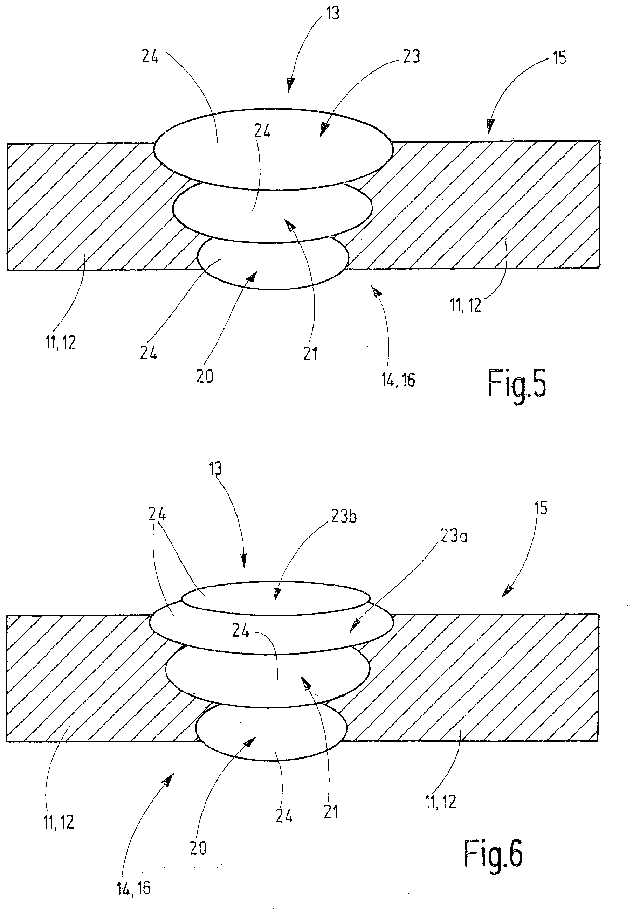

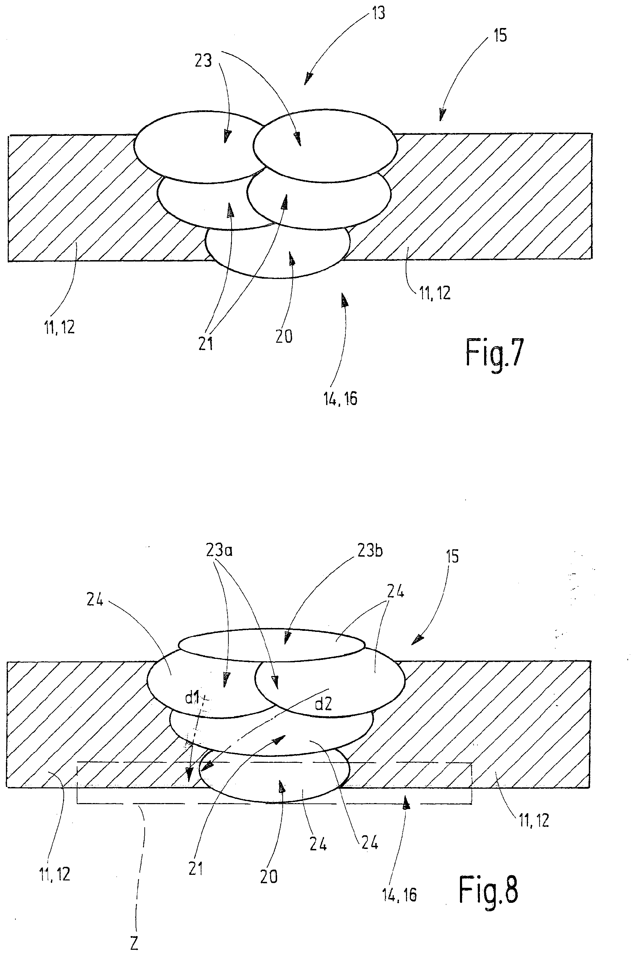

Auf die Fülllage 21 wird zumindest eine Decklage 23 und vorzugsweise eine erste Decklage 23a und eine zweite Decklage 23b aufgebracht. Die Anzahl der Schweißraupenbahnen pro Lage 20, 21, 23 kann variieren. Beispielsweise zeigen die Figuren 5 und 6 Lagen 20, 21, 23 mit jeweils einer Raupenbahn 24, während in Figur 7 und 8 die einzige Decklage 23 aus zwei in Fugenquerrichtung Q nebeneinander liegenden Raupenbahnen 24 gebildet ist. Auch die erste Decklage 23a in Figur 8 enthält zwei in Fugenquerrichtung Q nebeneinander liegenden Raupenbahnen 24. Auch die anderen Lagen 20, 21 können mehrere Raupenbahnen 24 aufweisen. Die Anzahl der Raupenbahnen 24 einer Lage 20, 21, 23 kann auch größer als zwei sein.

Bei der Ausführung der Schweißverbindung nach Figur 7 oder 8 liegen zwei Raupenbahnen 24 in einer Decklage 23 bzw. 23a nebeneinander. Der Abstand jeder Raupenbahn 24 zu einer Stelle in der wärmebeeinflussten Zone Z außerhalb der Mittelebene durch die Fuge 17 ist unterschiedlich groß, wie dies beispielhaft für eine beliebige Stelle in Figur 8 anhand der Pfeile d1 und d2 sehr schematisch illustriert ist. Der Wärmeeinfluss beim Schweißen der beiden Raupenbahnen 24 der Decklage 23 bzw. 23a auf diese Stelle ist daher ebenfalls unterschiedlich groß. Es entsteht eine Asymmetrie. Abhängig davon, welche Raupenbahn 24 zuletzt geschweißt wird, kann sich dadurch auf der betreffenden Seite der Fuge 17 in der wärmebeeinflussten Zone Z eine unerwünscht große Härte einstellen. In solchen Fällen wird wie in Figur 8 veranschaulicht ein zweite Decklage 23b mit einer Raupenbahn aufgebracht, so dass unsymmetrische Temperaturbeeinflussungen in die wärmebeeinflusste Zone Z wieder ausgeglichen werden.

Die Schweißverbindung darf insbesondere im Bereich entlang der Innenseite 14 keine Aufhärtungen durch Martensitbildung und Sekundärhärtung aufweisen, die eine Rissbildung begünstigt. Die Härte muss insbesondere in diesem Bereich kleiner sein als 350 HV. Ganz besonders kritisch sind die beiden Übergänge 26 zwischen der Wurzellage 20 und dem jeweils benachbarten Teil 11, 12, sowie der Wurzeldurchhang 27. Gerade an diesen kritischen Stellen 26, 27 kann eine Rissbildung beginnen, wenn der Innenseitenbereich Aufhärtungen aufweist.

Erfindungsgemäß erfolgt das Schweißen der wenigstens einen Decklage 23 mit derart vorgegebenen Schweißparametern, dass sich im Bereich Wurzellage 20 an der Innenseite 14 im Bereich einer Wärmebeeinflussten Zone Z eine Temperatur T in einem Optimierungstemperaturbereich von etwa. 600°C bis etwa 1000°C einstellt. Beispielsgemäß liegt der Optimierungstemperaturbereich zwischen der werkstoffspezifischen A_{C1}-Temperatur und der A_{C3}-Temperatur. Die Untergrenze des Optimierungstemperaturbereichs kann aufgrund von Ausscheidungsvorgängen auch etwa 100°C unterhalb A_{C1}-Temperatur liegen. Für den Werkstoff T24 beispielsweise beträgt die A_{C1}-Temperatur 815°C und die A_{C3}-Temperatur 930°C. Dadurch werden beim Erstellen der Wurzellage 20 und/oder beim Erstellen der Fülllage 21 entstandene Aufhärtungen in dem wärmebeeinflussten Bereich an der Innenseite 14 reduziert oder eliminiert und die Härte in diesem wärmebeeinflussten Bereich an der Innenseite 14 auf zulässige Werte reduziert, die insbesondere kleiner sind als 350 HV.

Als vorgegebener Schweißparameter dient beispielsgemäß der Schweißstrom I, der beim Schweißen der wenigstens einen Decklage 23 vorgegeben wird.

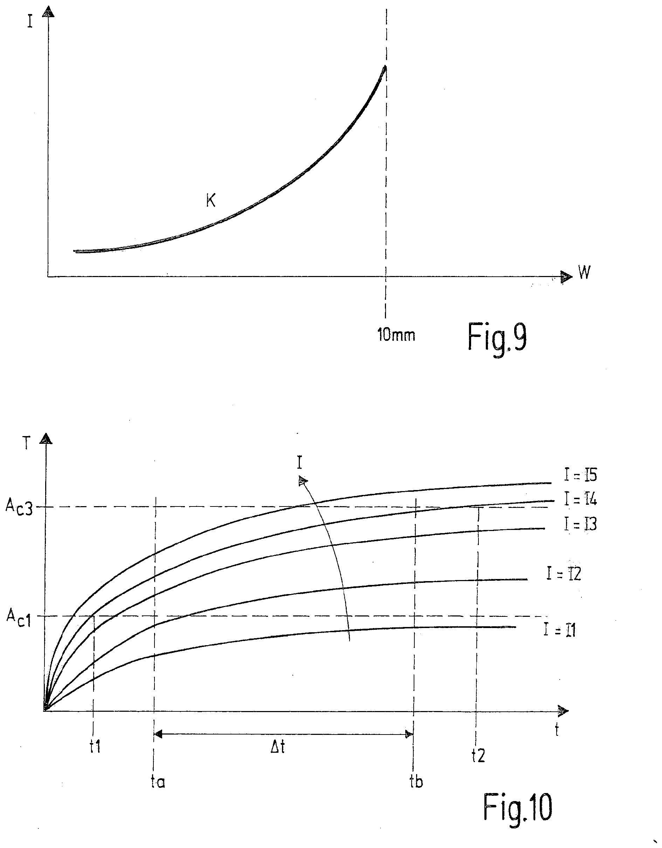

Der Schweißstrom I zum Schweißen der wenigstens einen Decklage 23 wird nach einem vorgegebenen nicht-linearen Zusammenhang mit der Wandstärke W eingestellt, wie dies durch die Kurve K qualitativ in Figur 9 veranschaulicht ist. Der Schweißstrom I und die Schweißstromänderung nehmen mit zunehmender Wandstärken W zu. Das bedeutet, die Steigung der Kurve K steigt mit zunehmender Wandstärke W an.

Beim Schweißen der Deckschicht 23 wird der Schweißstrom I so eingestellt, dass sich der Temperatureintrag und die Wärmeableitung durch die Wände der zu verbindenden Rohre 11 im Bereich der Innenseite 14 in einem Gleichgewichtszustand innerhalb des Optimierungstemperaturbereichs zwischen T=A_{C1} und T=A_{C3} befinden. Für jede Wandstärke W ergibt sich der in Figur 10 dargestellte Zusammenhang. Die Temperatur T in der wärmebeeinflussten Zone Z im Bereich der Innenseite 14 ist dort für eine Wandstärke W abhängig von der Zeit t an einer Umfangsstelle entlang der Fuge 17 dargestellt. Für jeden Schweißstrom I ergibt sich ein anderer Zusammenhang, so dass mit dem Schweißstrom I als Parameter eine Kurvenschar gebildet ist.

Um den oben beschriebenen Gleichgewichtszustand zu erreichen wird die Stromstärke des Schweißstroms I so bestimmt, dass die Temperatur T in der wärmebeeinflussten Zone Z zu einem ersten Zeitpunkt t1 die A_{C1}-Temperatur überschreitet, der kleiner ist als vorgegebener erster Zeitdauergrenzwert ta. Die A_{C1}-Temperatur stellt den unteren Temperaturgrenzwert dar, der erreicht werden muss. Zum anderen wird der Schweißstrom I so eingestellt, dass die Temperatur T in der wärmebeeinflussten Zone Z vor Ablauf eines zweiten Zeitdauergrenzwertes tb den durch die A_{C3}-Temperatur gegebenen oberen Temperaturgrenzwert nicht überschreitet. Die Zeitdifferenz Δt zwischen dem zweiten Zeitdauergrenzwert tb und dem ersten Zeitdauergrenzwert ta ist ausreichend groß, so dass für das Schweißen durch einen Bediener ausreichend Zeit verbleibt. Da dieser die Elektrode entlang der Fuge 17 bewegt, wird durch das vorgegebene Zeitintervall Δt ein ausreichend großer Zeitraum für jede Schweißgerät-Bedienperson vorgegeben, so dass unabhängig von den Eigenheiten der Bedienperson ein Termperatureintrag in die wärmebeeinflusste Zone Z im gewünschten Optimierungstemperaturbereich zwischen der A_{C1}- und der A_{C3}-Temperatur erreicht ist.

Bei dem in Figur 10 veranschaulichten Beispiel eignet sich beispielsweise die Stromstärke I4 für den Schweißstrom I. Die dazugehörige Temperaturkurve erreicht zu einem ersten Zeitpunkt t1 die A_{C1}-Temperatur, der kleiner ist als der erste Zeitdauergrenzwert ta, und überschreitet die A_{C3}-Temperatur erst zu einem zweiten Zeitpunkt t2 nach Ablauf des zweiten Zeitdauergrenzwerts tb. Auch die Stromstärke I3 für den Schweißstrom I wäre geeignet.

Werden mehrere Decklagen 23a, 23b hergestellt, so sind unter gleichen geometrischen Verhältnissen der zu verbindenden Teile die Schweißparameter und insbesondere der Schweißstrom I für alle Decklagen 23a, 23b identisch.

Die Decklage 23 kann auf einer oder auf beiden Seiten einen Abstand zu dem jeweils benachbarten Teil 11, 12 aufweisen, der als Saumbreite S bezeichnet wird und beispielsgemäß zwischen 0 und 2 Millimetern beträgt.

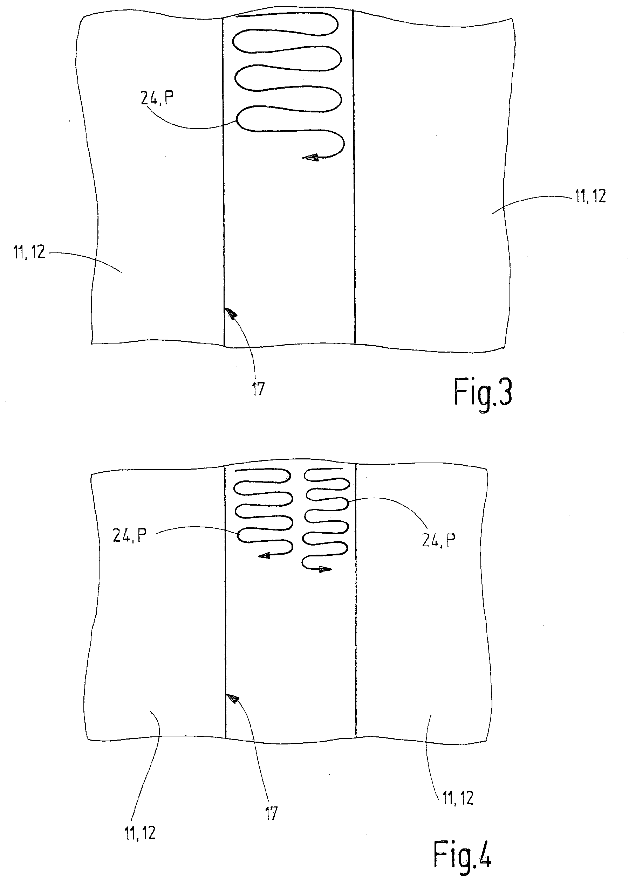

Die Schweißraupe 24 der Decklage 23 bzw. die Schweißraupen 24 der Decklagen 23a, 23b werden nicht als Strichraupen, sondern in Form von Pendelraupen P ausgeführt, wie dies schematisch in den Figuren 3 und 4 dargestellt ist. Beim Schweißen werden die Schweißelektrode und/oder der Schweißdraht aus Schweißzusatzwerkstoff in Schlangenlinien oder Zick-Zack-Linien in der Fuge 17 bewegt. Die Auslenkung in Fugenquerrichtung Q beträgt dabei zumindest das Zweifache oder Dreifache des Elektroden- bzw. des Schweißdrahtdurchmessers. Bestehen die zu verbindenden Teile aus einem artgleichen Werkstoff, wird in der Regel auch ein artgleicher Schweißzusatzwerkstoff verwendet, beispielsweise WZCrMo2VTiNb für Rohre aus T24. Bei artfremden Schweißverbindungen findet die erfindungsgemäße Schweißtechnik Anwendung, sofern zumindest eines der zu verbindenden Teile und/oder der Schweißzusatzwerkstoff lufthärtende Eigenschaften aufweist. Der Schweißdraht hat beispielsgemäß einen Durchmesser von 2,0 bis 2,5 Millimetern.

Die Erfindung betrifft ein Verfahren zum Verbinden zweier Teile 11, 12, wobei zumindest eines der beiden Teile oder ein beim Herstellen der Schweißverbindung verwendeter Schweißzusatzwerkstoff aus einer lufthärtenden Stahllegierung besteht und insbesondere aus dem Werkstoff T23 oder T24 bestehen. Zwischen den zu verbindenden Teilen wird eine Fuge 17 hergestellt, die sich von einer Innenseite 14 zu einer Außenseite 15 erweitert. Zunächst wird eine Wurzellage 20 im Bereich der Innenseite 14 geschweißt. Anschließend wird eine Fülllage 21 angrenzend an die Wurzellage 20 geschweißt, so dass die Fuge zumindest zu 90% gefüllt ist. Schließlich wird auf die Fülllage 21 zumindest eine Decklage 23 aufgeschweißt, wobei die Schweißparameter so vorgegeben sind, dass sich im Bereich Wurzellage 20 an der Innenseite 14 im Bereich einer wärmebeeinflussten Zone (Z) eine Temperatur in einem Optimierungstemperaturbereich von 600°C bis 1000°C einstellt.

## Patentansprüche

1. Verfahren zum Verbinden zweier Teile (11, 12) durch Schweißen, wobei zumindest eines der beiden Teile (11, 12) oder ein beim Herstellen der Schweißverbindung verwendeter Schweißzusatzwerkstoff aus einer lufthärtenden Stahllegierung besteht, mit folgenden Schritten:
- Bereitstellen einer sich zwischen einer Innenseite (14) zu einer Außenseite (15)erstreckenden Fuge (17) zwischen den zu verbindenden Teilen (11, 12),
- Schweißen einer Wurzellage (20) im Bereich der Innenseite (14),
- Schweißen einer Fülllage (21) angrenzend an die Wurzellage (20), **gekennzeichnet durch**
- Schweißen wenigstens einer Decklage (23) angrenzend an die Fülllage (21) im Bereich der Außenseite (15) mit vorgegebenen Schweißparametern,
wobei sich beim Schweißen der Decklage (23) im Bereich Wurzellage (20) an der Innenseite (14) im Bereich einer wärmebeeinflussten Zone (Z) eine Temperatur in einem Optimierungstemperaturbereich von 600°C bis 1000°C einstellt, und dadurch zur Reduzierung der Härte in der wärmebeeinflussten Zone (Z) an der Innenseite (14) führt.

2. Verfahren nach Anspruch 1,
**dadurch gekennzeichnet, dass** die Stahllegierung einen Chromanteil im Bereich von 1,9 - 2,6 Gewichtsprozent (Gew%) aufweist.

3. Verfahren nach Anspruch 2,
**dadurch gekennzeichnet, dass** die Stahllegierung einen Chromanteil im Bereich von 2,25 - 2,5 Gewichtsprozent (Gew%) aufweist.

4. Verfahren nach einem der vorhergehenden Ansprüche, **dadurch gekennzeichnet, dass** die wenigstens eine Schweißraupe (24) der wenigstens einen Decklage (23) als Pendelraupe (P) ausgeführt ist.

5. Verfahren nach einem der vorhergehenden Ansprüche, **dadurch gekennzeichnet, dass** die Obergrenze des Optimierungstemperaturbereichs der werkstoffspezifischen A_{C3}-Temperatur der zu verbindenden Teile (11, 12) entspricht.

6. Verfahren nach einem der vorhergehenden Ansprüche, **dadurch gekennzeichnet, dass** die Untergrenze des Optimierungstemperaturbereichs in etwa bei 700°C liegt.

7. Verfahren nach einem der vorhergehenden Ansprüche, **dadurch gekennzeichnet, dass** die Untergrenze des Optimierungstemperaturbereichs der werkstoffspezifischen A_{C1}-Temperatur der zu verbindenden Teile (11, 12) entspricht.

8. Verfahren nach einem der vorhergehenden Ansprüche, **dadurch gekennzeichnet, dass** der Schweißstrom (I) zum Schweißen der wenigstens einen Decklage (23) zwischen 70 und 120 A und vorzugsweise zwischen 85 bis 95 A beträgt.

9. Verfahren nach einem der vorhergehenden Ansprüche, **dadurch gekennzeichnet, dass** es sich bei den zu verbindenden Teilen (11, 12) um zwei Rohre (11) oder zwei Stege (12) eines Rohrwandregisters (10) einer Kesselwand handelt.

10. Verfahren nach einem der vorhergehenden Ansprüche, **dadurch gekennzeichnet, dass** die zu verbindenden Teile (11, 12) eine Wandstärke (W) von kleiner als 10 Millimeter aufweisen.

11. Verfahren nach einem der vorhergehenden Ansprüche, **dadurch gekennzeichnet, dass** die zu verbindenden Teile (11, 12) eine Wandstärke (W) im Bereich von 5,6 bis 6,3 Millimetern aufweisen.

12. Verfahren nach einem der vorhergehenden Ansprüche, **dadurch gekennzeichnet, dass** der Kohlenstoffanteil der zu verbindenden Teile (11, 12) zumindest 0,05 bis 0,10 Gewichtsprozent (Gew%) beträgt.

13. Verfahren nach einem der vorhergehenden Ansprüche, **dadurch gekennzeichnet, dass** jede der Lagen (20, 21, 23, 23a, 23b) eine oder mehrere Schweißraupenbahnen (24) aufweist.

14. Verfahren nach einem der vorhergehenden Ansprüche, **dadurch gekennzeichnet, dass** ein als Schweißzusatzwerkstoff benutzter Schweißdraht einen Durchmesser von 2,0 bis 2,5 Millimetern aufweist.

## Claims

1. A method for connecting two parts (11, 12) by welding, at least one of the two parts (11, 12) or a welding filler material used during the production of the weld connection consisting of an air-hardening steel alloy, the method comprising the following steps:
- providing a joint (17) between the parts (11, 12) to be connected, which joint extends between an inner side (14) and an outer side (15),
- welding a root layer (20) in the region of the inner side (14),
- welding a filling layer (21) adjacent to the root layer (20),
**characterized by**
- welding at least one cover layer (23) adjacent to the filling layer (21) in the region of the outer side (15) using predetermined welding parameters,
a temperature in an optimization temperature range of 600°C to 1000°C being established in the region of a heat-influenced zone (Z) during the welding of the cover layer (23) in the region of the root layer (20) on the inner side (14), and thereby leading to a reduction in the hardness in the heat-influenced zone (Z) on the inner side (14).

2. The method according to claim 1,
**characterized in that** the steel alloy has a chromium content in the range of 1.9 - 2.6 percent by weight (wt.%).

3. The method according to claim 2,
**characterized in that** the steel alloy has a chromium content in the range of 2.25 - 2.5 percent by weight (wt.%).

4. The method according to any of the preceding claims,
**characterized in that** the at least one weld bead (24) of the at least one cover layer (23) is in the form of a pendulum bead (P).

5. The method according to any of the preceding claims,
**characterized in that** the upper limit of the optimization temperature range corresponds to the material-specific A_{C3} temperature of the parts (11, 12) to be connected.

6. The method according to any of the preceding claims,
**characterized in that** the lower limit of the optimization temperature range is approximately 700°C.

7. The method according to any of the preceding claims,
**characterized in that** the lower limit of the optimization temperature range corresponds to the material-specific A_{C1} temperature of the parts (11, 12) to be connected.

8. The method according to any of the preceding claims,
**characterized in that** the welding current (I) for welding the at least one cover layer (23) is between 70 and 120 A and preferably between 85 and 95 A.

9. The method according to any of the preceding claims,
**characterized in that** the parts (11, 12) to be connected are two tubes (11) or two webs (12) of a tube wall register (10) of a boiler wall.

10. The method according to any of the preceding claims,
**characterized in that** the parts (11, 12) to be connected have a wall thickness (W) of less than 10 millimeters.

11. The method according to any of the preceding claims,
**characterized in that** the parts (11, 12) to be connected have a wall thickness (W) in the range of from 5.6 to 6.3 millimeters.

12. The method according to any of the preceding claims,
**characterized in that** the carbon content of the parts (11, 12) to be connected is at least 0.05 to 0.10 percent by weight (wt.%).

13. The method according to any of the preceding claims,
**characterized in that** each of the layers (20, 21, 23, 23a, 23b) has one or more weld bead tracks (24).

14. The method according to any of the preceding claims,
**characterized in that** a welding wire used as the welding filler material has a diameter of 2.0 to 2.5 millimeters.

## Revendications

1. Procédé pour le raccordement de deux pièces (11, 12) par soudage, au moins une des deux pièces (11, 12) ou un métal d'apport utilisé lors de la fabrication du raccord soudé étant composé d'un alliage d'acier durcissable à l'air, comportant les étapes suivantes :
- fourniture d'un joint (17) s'étendant entre une face intérieure (14) à une face extérieure (15) entre les pièces (11, 12) à raccorder,
- soudage d'une passe de fond (20) dans la région de la face intérieure (14),
- soudage d'une passe de remplissage (21) adjacente à la passe de fond (20), **caractérisé par**
- le soudage d'au moins une passe de bouchon (23) adjacente à la passe de remplissage (21) dans la région de la face extérieure (15) avec des paramètres de soudage prédéterminés,
lors du soudage de la passe de bouchon (23) dans la région de la passe de fond (20), une température dans une plage de température d'optimisation de 600 °C à 1000 °C s'établissant sur la face intérieure (14) dans une région d'une zone affectée par la chaleur (Z) et entraînant ainsi une réduction de la dureté dans la zone affectée par la chaleur (Z) sur la face intérieure (14).

2. Procédé selon la revendication 1,
**caractérisé en ce que** l'alliage d'acier présente une teneur en chrome dans la plage de 1,9 à 2,6 pour cent en poids (% en poids).

3. Procédé selon la revendication 2,
**caractérisé en ce que** l'alliage d'acier présente une teneur en chrome dans la plage de 2,25 à 2,5 pour cent en poids (% en poids).

4. Procédé selon l'une des revendications précédentes,
**caractérisé en ce que** l'au moins un cordon de soudure (24) de l'au moins une passe de bouchon (23) est réalisé en tant que cordon de pendule (P).

5. Procédé selon l'une des revendications précédentes,
**caractérisé en ce que** la limite supérieure de la plage de température d'optimisation correspond à la température A_{C3} spécifique au matériau des pièces (11, 12) à raccorder.

6. Procédé selon l'une des revendications précédentes,
**caractérisé en ce que** la limite inférieure de la plage de température d'optimisation se situe à environ 700 °C.

7. Procédé selon l'une des revendications précédentes,
**caractérisé en ce que** la limite inférieure de la plage de température d'optimisation correspond à la température A_{C1} spécifique au matériau des pièces (11, 12) à raccorder.

8. Procédé selon l'une des revendications précédentes,
**caractérisé en ce que** le courant de soudage (I) pour le soudage de l'au moins une passe de bouchon (23) est compris entre 70 et 120 A et de préférence entre 85 et 95 A.

9. Procédé selon l'une des revendications précédentes,
**caractérisé en ce que** les pièces (11, 12) à raccorder sont deux tubes (11) ou deux traverses (12) d'un registre de paroi tubulaire (10) d'une paroi de chaudière.

10. Procédé selon l'une des revendications précédentes,
**caractérisé en ce que** les pièces (11, 12) à raccorder présentent une épaisseur de paroi (W) inférieure à 10 millimètres.

11. Procédé selon l'une des revendications précédentes,
**caractérisé en ce que** les pièces (11, 12) à raccorder présentent une épaisseur de paroi (W) dans la plage de 5,6 à 6,3 millimètres.

12. Procédé selon l'une des revendications précédentes,
**caractérisé en ce que** la teneur en carbone des pièces (11, 12) à raccorder est d'au moins 0,05 à 0,10 pour cent en poids (% en poids).

13. Procédé selon l'une des revendications précédentes,
**caractérisé en ce que** chacune des passes (20, 21, 23, 23a, 23b) présente un ou plusieurs chemins de cordon de soudure (24).

14. Procédé selon l'une des revendications précédentes,
**caractérisé en ce qu'**un fil de soudage utilisé comme métal d'apport présente un diamètre de 2,0 à 2,5 millimètres.
